# EUROPÄISCHE PATENTSCHRIFT

(11) **EP 1 628 242 B1**
(45) Veröffentlichungstag und Bekanntmachung des Hinweises auf die Patenterteilung: **16.10.2019**
(21) Anmeldenummer: 04103932.2
(22) Anmeldetag: 16.08.2004
(51) Int. Cl.: G06K 17/00

(54) **Verfahren zur Wiederverwertung von Identifizierungskodes**
Method for recycling identification codes
Procédé pour le recyclage de codes d'identification

(43) Veröffentlichungstag der Anmeldung: 22.02.2006
(73) Patentinhaber: Swisscom AG, 3050 Bern (CH)
(72) Erfinder: Ritter, Rudolf, 3052 Zollikofen (CH)
(74) Vertreter: P&TS SA (AG, Ltd.)

(56) Entgegenhaltungen:
- WO-A1-02/39357
- US-A1- 2004 155 106
- COLLEEN LAKO: "From the chair" THE PITTSBURGH PULSE, Bd. 13, 3. Oktober 1999 (1999-10-03), Seiten 1-3, XP002316698 PITTSBURGH

## Beschreibung

Die vorliegende Erfindung betrifft ein Verfahren zur Wiederverwertung von Identifizierungskodes. Die vorliegende Erfindung betrifft insbesondere ein Verfahren zur Wiederverwertung von einmaligen Kodes, die zur individuellen Kennzeichnung von individuellen Produkten dienen.

Zur Kennzeichnung von Produkten sind mehrere Systeme bekannt. Gemäss bestimmten Verfahren wird zum Beispiel das Produkt mit einem sogenannten RFID-Element (oder Tag) markiert, welches Informationen über das Produkt enthält. Dabei verfügen manche Tags über einen Speicherbereich, der kontaktlos mit einem RFID-Lesegerät gelesen werden kann und in welchem die gewünschte Information eingespeichert wird. Da der Preis der Tags stark von der Grösse des Speichers abhängig ist, werden solche Tags vor allem dann eingesetzt, wenn nur wenig Informationen benötigt werden; beispielsweise das Produktherstellungsdatum, eine Seriennummer, usw.

Es sind auch Verfahren bekannt, in welchen die gewünschte Information aus einer externen Datenbank geholt wird, in welcher mehrere (Tags betreffende) Informationen abgelegt werden. In diesem Fall wird ein Kode der sich im Tag befindet gelesen und als Recherchenkriterium in der externen Datenbank verwendet, aus welcher die gewünschte Information abgeholt wird. Dabei ist die Verknüpfung zwischen einem Produkt und dem Datensatz in der Datenbank statisch und permanent; ein mit einem Tag markiertes Produkt ergibt stets Zugriff auf die gleiche Information.

Der angebotene Informationsinhalt ist dabei meistens nur von der Klassifizierung des Objekts (Typ des Produkts) abhängig. Es sind jedoch auch Verfahren bekannt, bei welchen alle individuellen Objekte durch einen individuellen einmaligen Kode im RFID-Tag gekennzeichnet sind (beispielsweise mit einer Seriennummer). Mit diesem individuellen Kode kann für jedes einzelne Produkt eine produktspezifische Information (beispielsweise das Verfalldatum oder die Dauer der Garantie) aus einer externen Datenbank abgeholt werden.

Das EPC-Global System hat zum Beispiel RFID-Tags mit EPC-Kodes vorgeschlagen, mit welchen unter anderem die verbreiteten Strichkodes ersetzt oder ergänzt werden sollen. EPC-Kodes sind Nummern, die einen Vorsatz und drei Sets von Daten enthalten. Ein Set von Daten identifiziert einen Produkthersteller, ein zweites Set den exakten Typ des Produkts und ein drittes Set ist eine Seriennummer, die jedes individuelle Produkt individuell kennzeichnet. Es wurden EPC-Kodes mit 64 und 96 Bits vorgeschlagen; es könnten eventuell mehr sein.

EPC-Kodes werden in RFID-Tags gespeichert. EPC-kompatible RFID-Tags kommunizieren kontaktlos über eine lokale Funkschnittstelle und gemäss einem offenen Standard mit RFID-Lesegeräten.

Ein EPC-fähiges RFID-Tag enthält einen einzigen EPC-Kode und jeder EPC-Kode wird mit einem einzigen RFID-Tag assoziiert. Jeder EPC-RFID-Tag ist somit einmalig; das Lesen eines EPC-RFID-Tags erlaubt es dem Leser, eine Information einzuholen, die unterschiedlich von der Information ist, die aus einem anderen EPC-RFID-Tag geholt werden kann. Jedes mit einem EPC-Kode markierte Produkt wird somit mit einer individuellen, möglicherweise einmaligen, Information assoziiert.

Obwohl ein EPC-Kode bis 36 Bits für die Seriennummer reserviert (was ca. 68 Milliarden verschiedene Nummer bedeutet), kann dies nach einer gewissen Zeit, insbesondere für Produkte, die in grösseren Mengen als erwartet produziert werden, nicht mehr genügen. Insbesondere kann ein Mangel an bestimmten Kodes auftauchen, wenn die für bestimmte Länder und/oder Hersteller reservierte Kodeserien ungeschickt verteilt wurden. Es müssen dann neue Verteilungen und/oder Unterteilungen von gewissen Kodeserien vorgenommen werden, oder gar ein neuer Standard entwickelt werden, welcher zum Beispiel einen erhöhten Speicherplatz vorsieht, was wesentliche Mehrkosten verursacht.

Der Artikel by Colleen Lako, "From the chair", veröffentlicht in The Pittsburgh Pulse, Bd. 13, 2. Seite, 3. Oktober 1999 beschreibt ganz allgemein die Wiederverwendung eines Strichcodes.

Die Veröffentlichungsschrift US20040155106A1 offenbart ein System, in dem ein EPC RFID-Tag ausgelesen wird.

Die Veröffentlichung der internationalen Patentanmeldung WO02/39357 offenbart die Wiederverwendung von RFID-Tag für die Produktkennzeichnung.

Ein Ziel der Erfindung ist es also, ein Verfahren vorzuschlagen, um einen Mangel an einmaligen Kodes zu vermeiden.

Dieses Ziel wird mit einem Verfahren erreicht, welches die Merkmale des unabhängigen Anspruchs 1 aufweist. Bevorzugte Ausführungsformen sind in den abhängigen Ansprüchen 2-23 definiert.

Mit diesem Verfahren können einmalige Kodes, die je ein Produkt kennzeichnen welches nicht mehr verfolgt werden muss, zur Kennzeichnung von neuen Produkten verwendet werden. Die Kodes werden unabhängig von ihren Trägern wie zum Beispiel RFID-Tags oder Strichkodes wiederverwertet.

Die Erfindung wird mit Hilfe der Beschreibung einer bevorzugten Ausführungsform der Erfindung und der Figur besser verstanden. Es zeigt:

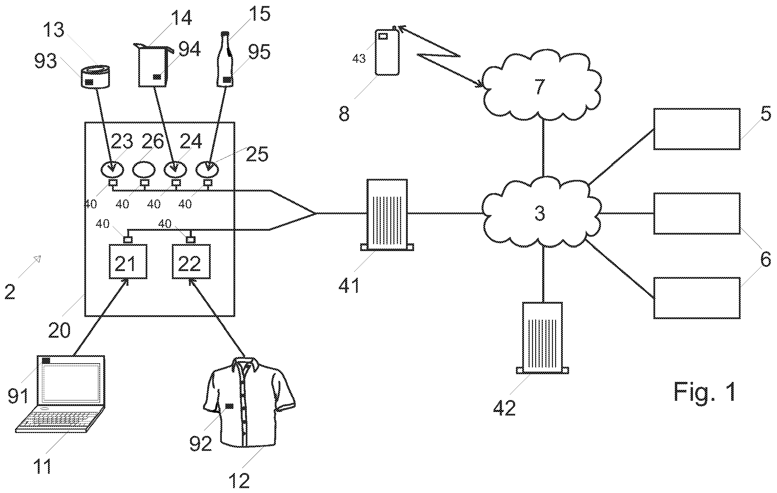

Fig. 1 eine schematische Darstellung des Verfahrens gemäss einer Ausführungsform der Erfindung.

Das Verfahren der Erfindung wird nachfolgend im Zusammenhang mit Kodes gemäss dem EPC-Global System beschrieben, wobei die Kodes in RFID-Tags gespeichert werden, welche fest an die zu identifizierenden Produkte gebunden werden. Das Verfahren der Erfindung kann aber auch mit anderen Kodes in RFID-Tags oder mit Kodes auf anderen Trägern (wie zum Beispiel Strichkodes) eingesetzt werden. Die Kodes sind aber vorzugsweise einmalig und können also zur eindeutigen individuellen Identifizierung von Einzelstücken dienen.

Gemäss dem EPC-Global System enthält zum Beispiel jeder Kode oder jede Identifizierungsnummer drei Sets von Daten. Ein Set von Daten identifiziert einen Produkthersteller, ein zweites Set gibt den exakten Typ des Produkts an und ein drittes Set ist eine Seriennummer, die jedes individuelle Produkt individuell identifiziert.

Gemäss einer bevorzugten Ausführungsform, die in Fig. 1 schematisch dargestellt ist, lässt sich das Verfahren der Erfindung vorzugsweise mit Produkten 11, 12, 13, 14, 15 verschiedenen Typs und möglicherweise von verschiedenen Herstellern anwenden. Jedes individuelle Produkt 11-15 ist mit einem einmaligen Kode gekennzeichnet. Der Kode ist vorzugsweise in einem RFID-Tag 91, 92, 93, 94, 95 gespeichert, welcher an das entsprechende Produkt 11, 12, 13, 14, 15 gebunden ist. Der RFID-Tag 91-95 wird vorzugsweise fest mit dem gekennzeichneten Produkt 11-15 verbunden, um einen Austausch des Kodes zu vermeiden. Vorzugsweise kann der RFID-Tag 91-95 nicht mehr vom Produkt 11-15 weggenommen werden, ohne dadurch den Tag 91-95 und/oder das Produkt 11-15 endgültig zu beschädigen und/oder zu zerstören.

Die RFID-Tags 91-95 umfassen je eine Antenne und eine integrierte Schaltung mit einem Speicherbereich zur Speicherung des einmaligen Kodes in digitaler Form. Die Antenne und die integrierte Schaltung sind zum Beispiel in einer selbstklebenden Etikette integriert, die auf das zu identifizierende Produkt geklebt wird. Andere Typen von RFID-Tags sind aber im Rahmen der Erfindung auch einsetzbar. Gewisse RFID-Tags bestehen zum Beispiel aus einem Kunststoffplättchen, in welchem die Antenne und die integrierte Schaltung zum Beispiel beim Giessen des Plättchens eingegossen wurden. Noch andere Tags werden direkt bei der Herstellung des Produktes im Produkt selber integriert, zum Beispiel eingegossen. Zur Kennzeichnung von Esswaren oder Getränken wird das Tag 93, 94, 95 zum Beispiel in oder auf der Packung 13, 14, 15 angebracht.

Gemäss dem heutigen EPC-Standard dient der einmalige Kode hauptsächlich der individuellen Kennzeichnung des individuellen Produkts 11-15 von seiner Herstellung bis zu seinem Endverkauf und erlaubt somit eine vollständige Rückverfolgbarkeit des Verteilungsprozesses. Im Rahmen der Erfindung kann aber der Kode während des ganzen Lebenslaufs des Produkts 11-15 benützt werden, um zum Beispiel bestimmte Prozesse des Kundendienstes wie zum Beispiel Reparatur- und/oder Wartungsprozesse überwachen und möglicherweise vereinfachen zu können.

Der Kode wird an bestimmten Zeitpunkten und möglicherweise an verschieden Orten mittels RFID-Lesern gelesen, zum Beispiel wann das Produkt 11-15 seine Herstellungsstelle verlässt, wann es verkauft wird, usw. Gemäss dem EPC-Standard sind die RFID-Leser 40 vorzugsweise an einen oder mehrere sogenannten Savant Computern 41 angeschlossen, welche mit einem ONS (Object Name Service) Server 42 über ein Telekommunikationsnetzwerk 3 (zum Beispiel über ein lokales Netz oder über das Internet) in Verbindung sind. Der Savant Computer 41 hat die Möglichkeit, mit einem bestimmten (zum Beispiel durch dem Leser 40 gelesenen) EPC-Kode eine Abfrage an den ONS Server 42 zu senden, um die Adresse einer oder mehrerer PML (Physical Markup Language) Seiten zu erhalten, welche statische und/oder dynamische Daten über das entsprechende Produkt 11-15 enthalten und die auf einem oder mehreren am Netz 3 angeschlossenen Computer gespeichert sind. Statische Daten umfassen zum Beispiel den Typ des Produkts, Gebrauchsanweisungen, usw. Dynamische Daten umfassen zum Beispiel den momentanen Standort des Produkts 11-15, die momentane Lagertemperatur, usw. Der Savant Computer 41 kann vorzugsweise auch neue Informationen auf der PML Seite hinzufügen und/oder die bestehende Information auffrischen.

Mit diesem System können bestimmte Prozesse der Verteilung, der Lagerung und/oder des Detailverkaufs vereinfacht und/oder besser kontrolliert werden.

Andere Systeme zur individuellen Rückverfolgbarkeit von individuellen Produkten sind aber im Rahmen der Erfindung auch möglich. Beim Lesen des RFID-Tags oder des Strichkodes eines individuellen Produkts wird aber vorzugsweise nur der einmalige Kode gelesen, während die restlichen statischen und dynamischen Daten über das entsprechende Produkt in einer oder mehreren Datenbanken gespeichert sind und mit Hilfe des Kodes zugänglich sind.

Die gekennzeichneten Produkte 11-15 umfassen zum Beispiel:
▪ verschiedene Typen von elektronischen Geräten 11, die für eine effizientere Verteilung und beispielsweise zur Kontrolle der Garantie eine eindeutige individuelle Identifizierung erfordern;
▪ verschiedene Esswaren oder Getränke 13, 14, 15, die für eine bessere Qualitätskontrolle eine vollständige Rückverfolgbarkeit benötigen;
▪ Kleidung 12.

Die oben zitierten Produkte sind nur als illustrative Beispiele angegeben. Im Rahmen der Erfindung können die Produkte 11-15 irgendwelche Produkte umfassen, die aus irgendeinem Grund eine individuelle Kennzeichnung brauchen.

Jeder RFID-Tag 91-95 umfasst vorzugsweise einen Speicherbereich, welcher nur einmal beschreibbar ist. Dieser Speicherbereich ist zum Beispiel ein ROM (read-only memory). Der entsprechende Kode wird vorzugsweise in diesem Speicherbereich gespeichert, damit er nicht mehr gelöscht und/oder geändert werden kann. Gewisse Tags umfassen aber möglicherweise auch einen weiteren Speicherbereich, zum Beispiel ein PROM (programmable ROM), ein EEPROM (electrically erasable PROM), usw., in welchen andere (möglicherweise temporäre) Daten gespeichert und wieder gelöscht werden können.

Wenn das Produkt 11-15 zum Beispiel ausser Betrieb ist, verbraucht wurde, oder einfach nicht mehr benutzt wird, wird gemäss der Erfindung das Produkt 11-15 oder nur ein Teil davon, an welchen das Tag 91-95 gebunden ist, zu einem Sammelpunkt 2 gebracht. Im Falle von gewissen Esswaren oder Getränken 13, 14, 15 wird zum Beispiel nur die Packung (worauf das Tag 93, 94, 95 geklebt wurde) zum Sammelpunkt 2 gebracht.

Der Sammelpunkt 2 umfasst einen Container 20 in einer öffentlichen Anlage, in einem Geschäft, bei einer Behörde, usw. Im Sammelpunkt 2 können vorzugsweise unterschiedliche Typen von Produkten 11-15 in einem einzigen oder mehreren Containern 20 entsorgt werden. Im Rahmen der Erfindung können gewisse Sammelpunkte nur bestimmte Produkte (wie zum Beispiel Produkte von einem gewissen Hersteller, eines gewissen Typs, usw.) annehmen, während andere Sammelpunkte alle Produkte annehmen, die durch einen bestimmten Typ von Tag und/oder von Kode gekennzeichnet sind. Gewisse Sammelpunkte werden zum Beispiel durch selbstständige Strukturen oder durch die Hersteller selber verwaltet.

Im Sammelpunkt 2 wird der Kode des zu entsorgenden Produktes 11-15 gelesen, indem zum Beispiel der RFID-Tag 91-95 des Produktes mit einem RFID-Leser 40 vorzugsweise automatisch gelesen wird.

Der Sammelpunkt 2 umfasst einen Container 20 mit verschiedenen Öffnungen 21-26 für verschiedene Produkte. Neben den Öffnungen 21-26 sind zum Beispiel ein oder mehrere RFID-Leser 40 angeordnet, welche den RFID-Tag 91-95 des Produktes 11-15 automatisch lesen, wenn das Produkt 11-15 durch die jeweilige Öffnung 21-26 in den Container entsorgt wird.

Gemäss einer weiteren Ausführungsform umfasst der Sammelpunkt 2 einen Container 20 mit einer oder mehreren Öffnungen 21-26, die nur dann aufgehen, wenn ein gültiger Kode gelesen wird. Im Sammelpunkt 2 sind zum Beispiel auf dem Container 20 ein oder mehrere RFID-Leser 40 vorhanden. Falls ein Produkt 11-15 an den Sammelpunkt 2 gebracht wird, wird zum Beispiel der RFID-Tag 91-95 des zu entsorgenden Produktes 11-15 durch einen von diesen Lesern 40 gelesen. Wenn der eingelesene Kode zum Beispiel gewisse Kriterien erfüllt, wird der Container 20 geöffnet. Besitzt der Container 20 mehrere Öffnungen 21-26, geht vorzugsweise nur die Öffnung auf, die für das zu entsorgenden Produkt bestimmt ist. Nachdem das Produkt in den Container 20 geworfen wurde und/oder nach einer bestimmten Zeit, schliesst sich der Container 20 wieder.

Nachdem das Produkt 11-15 in den Container 20 geworfen wurde, wird vorzugsweise sein RFID-Tag 91-95 (zum Beispiel durch einen weiteren nicht dargestellten RFID-Leser) im Container 20 noch einmal gelesen, um zu kontrollieren, dass sich das Produkt 11-15 oder zumindest sein RFID-Tag 91-95 wirklich im Container 20 befindet. Andere Kontrollmethoden (zum Beispiel mit Hilfe von Videoüberwachung, Wiegen des Inhaltes des Containers 20, usw.) sind aber im Rahmen der Erfindung auch möglich.

In einer weiteren Ausführungsform wird der Sammelpunkt 2 vollständig oder zumindest teilweise manuell betrieben. Das zu entsorgende Produkt 11-15 wird zum Beispiel einer Person ausgehändigt, die den RFID-Tag 91-95 mit einem RFID-Leser liest. Das Produkt 11-15 wird dann (zum Beispiel durch diese Person) manuell in einen Container oder auf ein Gestell entsorgt.

Die oben beschriebenen Typen von Sammelpunkten 2 sind als Beispiel angegeben. Weitere Ausführungsformen von Sammelpunkten sind im Rahmen der Erfindung auch möglich. Gemäss dem Verfahren der Erfindung können Sammelpunkte verschiedenen Typs zusammen eingesetzt werden.

Nach dem Lesen des Kodes im Sammelpunkt 2 wird das entsprechende Produkt 11-15 in den jeweiligen Verfolgbarkeitssystemen als nicht mehr verfolgt eingetragen. Es wird also in den Datenverarbeitungssystemen zum Verfolgen des entsprechenden Produkts 11-15 auf Basis der Daten aus dem Kodeleser, welcher je nach Träger des Kodes zum Beispiel ein RFID-Leser oder ein Strichkode-Leser ist, festgestellt, dass das gelesene Kode neu verfügbar ist.

In einem System nach EPC-Standard wird zum Beispiel mit dem gelesenen Kode eine ONS-Abfrage an einen ONS-Server 42 gesendet, um die Adresse der PML-Seite (oder Seiten, die Daten über das Produkt 11-15 enthalten) zu erfahren. In einer Ausführungsform wird auf mindestens einer PML-Seite die Information eingetragen, dass das entsprechende Produkt 11-15 durch das System nicht mehr verfolgt wird. In einer anderen Ausführungsform wird diese Information auf einer neuen PML-Seite eingetragen. Die das Produkt 11-15 betreffenden PML-Seiten werden zum Beispiel gleich archiviert und vielleicht nach einer gewissen Zeit gelöscht.

Der Hersteller 5 des Produktes 11-15 wird vorzugsweise zum Beispiel durch die Änderung der PML-Seite oder durch eine Datenmeldung gleich informiert, dass das Produkt 11-15 im Verfolgbarkeitssystem nicht mehr verfolgt wird und dass der entsprechende einmalige Kode wieder verfügbar ist. Der neu verfügbare Kode wird vorzugsweise dem Hersteller 5 des vorher mit diesem Kode gekennzeichneten individuellen Produkts 11-15 zur Kennzeichnung eines neuen individuellen Produkts angeboten.

Wird der Sammelpunkt 2 durch eine vom Hersteller unabhängige Struktur verwaltet, wird der neu verfügbare Kode zum Beispiel dem Hersteller 5 verkauft. In einer Ausführungsform wird ausserdem dem Hersteller 5 auf Basis des gelesenen Kodes die Wiederverwertung des entsprechenden Produkts 11-15 verrechnet.

Der RFID-Tag 91-95, welcher das nicht mehr zu verfolgende Produkt 11-15 kennzeichnet und welcher mit diesem vorzugsweise verbunden ist, wird nach dem Lesen des wiederzuverwertenden Kodes vorzugsweise vernichtet und/oder es wird im RFID-Tag eingeschrieben, dass der entsprechende Kode wiederverwertet wurde, damit der Leser bei einem eventuellen nächsten Lesen des RFID-Tags 91-95 gleich informiert wird, dass der RFID-Tag nicht mehr gültig ist.

Um Datenkonflikte im Verfolgbarkeitssystem zwischen zwei nacheinanderfolgenden mit dem gleichen einmaligen Kode gekennzeichneten Produkten zu vermeiden, wird in einer Ausführungsform der Erfindung der neu verfügbare einmalige Kode nur nach einer gewissen Zeit und/ oder nach der endgültigen Vernichtung des mit diesem Kode markierten RFID-Tags (oder Strichkodes) zur Kennzeichnung eines neuen individuellen Produkts freigestellt.

Sollte der Hersteller 5 an der Wiederbenützung der neu verfügbaren Kodes nicht interessiert sein, hat er dann die Möglichkeit diesen zu vermarkten, indem er ihn zum Beispiel einzeln oder in Gruppen von einigen nacheinanderfolgenden Kodes direkt einem interessierten Erwerber 6 anbietet, welcher seine eigenen Produkte damit kennzeichnen wird, oder indem er sie an Auktionen (zum Beispiel durch externe Strukturen) verkaufen lässt. Die Erwerber 6 der neu verfügbaren einmaligen Kodes sind zum Beispiel Hersteller, die sie dann benützen werden, um ihre neuen Produkte damit zu identifizieren, weil sie zum Beispiel nicht mehr genug Kodes zu Verfügung haben, um ihre kurz- bis langfristig geplante Produktion zu decken.

Im Rahmen der Erfindung sind mehrere Methoden zur Vermarktung der neu verfügbaren Kodes einsetzbar.

In einer Ausführungsform der Erfindung werden die neu verfügbaren Kodes zum Beispiel den verschiedenen Erwerbern 6 auf Basis eines Prioritätssystems angeboten. Die Kodes werden zuerst einem ersten Erwerber angeboten. Sollte dieser die Offerte ablehnen, werden sie dem zweiten Erwerber angeboten, usw. Die Priorität kann zum Beispiel auf Basis des Erwerbsdatums und/oder auf Basis anderer Kriterien gesetzt werden.

In einer anderen Ausführungsform werden zum Beispiel regelmässig Auktionen zusammengestellt, wo neu verfügbare Kodes verkauft werden. Diese Auktionen finden zum Beispiel an einem bestimmten Ort, gleichzeitig in mehreren Orten und/oder über das Internet statt.

In noch einer anderen Ausführungsform gibt es eine Börse für neu verfügbare Kodes. Hersteller 5, die gewisse Kodes nicht mehr benutzen wollen (oder deren Vertreter) bieten sie für einen bestimmten Anfangspreis an dieser Börse an, wo potentielle Erwerber 6 sie kaufen können. Die Börse ist zum Beispiel eine elektronische Börse, die über ein Datennetzwerk 3 (wie zum Beispiel das Internet) betrieben wird. Die Erwerber 6 haben zum Beispiel einen freien oder zahlungspflichtigen Dienst abonniert, um Zugang zur Börse zu erhalten und/oder um einen Hinweis zu erhalten, wenn Kodes, die sie interessieren können (zum Beispiel aufgrund von vorgängig durch den Interessenten angegebenen Kriterien) angeboten werden.

Eine Kombination dieser verschiedenen oben beschriebenen Methoden zur Vermarktung der neu verfügbaren Kodes ist im Rahmen der Erfindung auch möglich.

Mit dem Verfahren der Erfindung werden mindestens ein Teil der nicht mehr benutzten einmaligen Kodes wiederverwertet. Die Kodes werden unabhängig von ihren Trägern, d.h. vom RFID-Tag 91-95 oder vom Strichkode wiederverwertet.

## Patentansprüche

1. Verfahren zur Wiederverwertung von einmaligen Kodes zur individuellen Kennzeichnung von individuellen Produkten (11-15), wobei die besagten Kodes je in einem RFID-Tag (91-95) gespeichert oder in Form eines Strichkodes kodiert sind, das folgende Schritte umfasst:
- Feststellung in einem Datenverarbeitungssystem beispielsweise auf Basis von Daten aus Kodeleser und/oder auf Basis einer Zeitspanne, dass ein einmaliger Kode, der ein nicht mehr zu verfolgendes Produkt (11-15) individuell kennzeichnet, neu verfügbar ist, wobei
- das Lesen in einem Sammelpunkt (2) zur Wiederverwertung des besagten Produkts (11-15) oder eines Teils des besagten Produkts (11-15) erfolgt, wobei der Sammelpunkt (2) einen Container (20) mit einer oder mehreren Öffnungen (21-26) umfasst, und neben den Öffnungen (21-26) Kodeleser angeordnet sind, die den Kode automatisch lesen, wenn das Produkt entsorgt wird; und
- Anbieten des besagten neu verfügbaren Kodes zur individuellen Kennzeichnung von einem anderen Produkt.

2. Verfahren gemäss dem vorherigen Anspruch, wobei die besagte Feststellung das Lesen des besagten neu verfügbaren Kodes aus einem RFID-Tag (91-95) oder aus einem Strichkode umfasst.

3. Verfahren gemäss dem vorherigen Anspruch, mit dem folgenden zusätzlichen Schritt:
- Vernichtung des besagten RFID-Tags (91-95) oder des besagten Strichkodes.

4. Verfahren gemäss einem der Ansprüche 2 oder 3, mit dem folgenden zusätzlichen Schritt:
- Einschreiben im besagten RFID-Tags (91-95) der Wiederverwertung des besagten neu verfügbaren Kodes.

5. Verfahren gemäss einem der Ansprüche 1 bis 4, wobei mehrere Öffnungen vorhanden sind und nur die Öffnung (21-26) aufgeht, die für das zu entsorgenden Produkt bestimmt ist

6. Verfahren gemäss Anspruch 5, wobei der Kode im Container (20) noch einmal gelesen wird, um zu kontrollieren, dass sich das Produkt (11-15) im Container befindet.

7. Verfahren gemäss Anspruch 5, wobei nachdem das Produkt in den Container (20) geworfen wurde und/oder nach einer bestimmten Zeit, sich der Container (20) wieder schliesst.

8. Verfahren gemäss einem der vorherigen Ansprüche, wobei ein Pfand für die Wiederverwertung des besagten Kodes und/oder des besagten Produktes (11-15) einem Benutzer gutgeschrieben wird.

9. Verfahren gemäss einem der vorherigen Ansprüche, wobei Kosten zur Wiederverwertung des besagten Produktes (11-15) einem Benutzer oder einem Hersteller (5) des besagten Produktes (11-15) verrechnet werden.

10. Verfahren gemäss einem der vorherigen Ansprüche, wobei der besagte neu verfügbare Kode ein Datenset zur Kennzeichnung eines Herstellers (5) des besagten Produktes (11-15) umfasst.

11. Verfahren gemäss dem vorherigen Anspruch, wobei der besagte neu verfügbare Kode dem besagten Hersteller (5) zuerst angeboten wird.

12. Verfahren gemäss dem vorherigen Anspruch, wobei der besagte neu verfügbare Kode durch den besagten Hersteller (5) einem anderen Erwerber (6) angeboten wird.

13. Verfahren gemäss einem der vorherigen Ansprüche, wobei der besagte neu verfügbare Kode verkauft wird.

14. Verfahren gemäss einem der vorherigen Ansprüche, wobei der besagte neu verfügbare Kode in einer Auktion verkauft wird.

15. Verfahren gemäss einem der vorherigen Ansprüche, wobei der besagte neu verfügbare Kode elektronisch verkauft wird.

16. Verfahren gemäss einem der vorherigen Ansprüche, wobei der besagte neu verfügbare Kode per Internet (3) verkauft wird.

17. Verfahren gemäss einem der vorherigen Ansprüche, wobei der besagte neu verfügbare Kode zusammen mit anderen Kodes, die mit dem besagten neu verfügbaren Kode ein gemeinsames Datenset haben, angeboten wird.

18. Verfahren gemäss einem der vorherigen Ansprüche mit dem folgenden zusätzlichen Schritt:
- Archivierung von Daten über das besagte Produkt (11-15) in einem Verfolgungssystem.

19. Verfahren gemäss dem vorherigen Anspruch, mit dem folgenden zusätzlichen Schritt:
- Einschreiben der Wiederverwertung des besagten Kodes in die besagten Daten.

20. Verfahren gemäss einem der vorherigen Ansprüche, wobei der besagte neu verfügbare Kode ein EPC-Kode ist.

21. Verfahren gemäss dem vorherigen Anspruch, mit dem folgenden zusätzlichen Schritt:
- Änderung in einem ONS Server (42) der Zuordnung von mindestens einer dem besagten neu verfügbaren Kode zugeordneten PML-Seite.

22. Verfahren gemäss einem der Ansprüche 20 oder 21, mit dem folgenden zusätzlichen Schritt:
- Änderung einer PML-Seite, die Daten über das besagte nicht mehr zu verfolgende Produkt (11-15) enthält.

23. Verfahren gemäss einem der Ansprüche 20 bis 22, mit dem folgenden zusätzlichen Schritt:
- Zuordnung in einem ONS Server (42) einer neuen PML-Seite mit dem besagten neu verfügbaren Kode.

## Claims

1. Method for recycling unique codes for individually identifying individual products (11-15), wherein said codes are stored in each case in an RFID tag (91-95) or are encoded in the form of a barcode, comprising the following steps:
- determining in a data processing system, for example on the basis of data from a code reader and/or on the basis of a time period, that a unique code that individually identifies a product (11-15) that is no longer to be tracked has become available again, wherein
- reading is effected in a collection point (2) for recycling said product (11-15) or part of said product (11-15), wherein the collection point (2) comprises a container (20) having one or more openings (21-26), and code readers that automatically read the code when the product is disposed of are arranged next to the openings (21-26); and
- offering said newly available code for individually identifying another product.

2. Method according to the preceding claim, wherein said determining comprises reading said newly available code from an RFID tag (91-95) or from a barcode.

3. Method according to the preceding claim, having the following additional step:
- destroying said RFID tag (91-95) or said barcode.

4. Method according to either of Claims 2 and 3, having the following additional step:
- writing the recycling of said newly available code in said RFID tag (91-95).

5. Method according to one of Claims 1 to 4, wherein a plurality of openings are present, and only the opening (21-26) that is intended for the product to be disposed of opens.

6. Method according to Claim 5, wherein the code is read again in the container (20) to check that the product (11-15) is situated in the container.

7. Method according to Claim 5, wherein the container (20) closes again after the product has been thrown into the container (20) and/or after a specified time.

8. Method according to one of the preceding claims, wherein a deposit for the recycling of said code and/or of said product (11-15) is credited to a user.

9. Method according to one of the preceding claims, wherein costs for recycling said product (11-15) are charged to a user or to a manufacturer (5) of said product (11-15) .

10. Method according to one of the preceding claims, wherein said newly available code comprises a data set for identifying a manufacturer (5) of said product (11-15) .

11. Method according to the preceding claim, wherein said newly available code is offered first to said manufacturer (5).

12. Method according to the preceding claim, wherein said newly available code is offered to another buyer (6) by said manufacturer (5).

13. Method according to one of the preceding claims, wherein said newly available code is sold.

14. Method according to one of the preceding claims, wherein said newly available code is sold in an auction.

15. Method according to one of the preceding claims, wherein said newly available code is sold electronically.

16. Method according to one of the preceding claims, wherein said newly available code is sold via the Internet (3).

17. Method according to one of the preceding claims, wherein said newly available code is offered together with other codes that have a data set in common with said newly available code.

18. Method according to one of the preceding claims, having the following additional step:
- archiving data relating to said product (11-15) in a tracking system.

19. Method according to the preceding claim, having the following additional step:
- writing the recycling of said code into said data.

20. Method according to one of the preceding claims, wherein said newly available code is an EPC code.

21. Method according to the preceding claim, having the following additional step:
- changing the assignment of at least one PML site that is assigned to said newly available code in an ONS server (42) .

22. Method according to either of Claims 20 and 21, having the following additional step:
- changing a PML site that contains data relating to said product (11-15) that is no longer to be tracked.

23. Method according to one of Claims 20 to 22, having the following additional step:
- assigning a new PML site with said newly available code in an ONS server (42).

## Revendications

1. Procédé de réutilisation de codes uniques pour l'identification individuelle de produits individuels (11-15), chacun desdits codes étant mémorisé dans une étiquette RFID (91-95) ou codé sous la forme d'un code à barres, le procédé comprenant les étapes suivantes :
- détecter dans un système de traitement de données, par exemple sur la base de données provenant d'un lecteur de code et/ou sur la base d'une durée, qu'un code unique identifiant individuellement un produit (11-15) qui n'est plus suivi est à nouveau disponible,
- la lecture étant effectuée dans un point de collecte (2) pour la réutilisation dudit produit (11-15) ou d'une partie dudit produit (11-15), le point de collecte (2) comprenant un conteneur (20) pourvu d'au moins une ouverture (21-26), et des lecteurs de code étant disposés près des ouvertures (21-26), lesquels lisent automatiquement le code lorsque le produit est mis au rebut ; et
- proposer ledit code nouvellement disponible pour l'identification individuelle d'un autre produit.

2. Procédé selon la revendication précédente, ladite détection comprenant la lecture dudit code nouvellement disponible à partir d'une étiquette RFID (91-95) ou d'un code à barres.

3. Procédé selon la revendication précédente, comprenant l'étape supplémentaire suivante :
- détruire de ladite étiquette RFID (91-95) ou ledit code à barres.

4. Procédé selon l'une des revendications 2 et 3, comprenant l'étape supplémentaire suivante :
- enregistrer la réutilisation dudit code nouvellement disponible dans ladite étiquette RFID (91-95) .

5. Procédé selon l'une des revendications 1 à 4, une pluralité d'ouvertures étant prévues et seule l'ouverture (21-26) qui est destinée au produit à éliminer s'ouvrant.

6. Procédé selon la revendication 5, le code étant relu dans le conteneur (20) pour vérifier que le produit (11-15) se trouve dans le conteneur.

7. Procédé selon la revendication 5, le récipient (20) se refermant après que le produit a été jeté dans le conteneur (20) et/ou après un certain temps.

8. Procédé selon l'une des revendications précédentes, une consigne pour la réutilisation dudit code et/ou dudit produit (11-15) étant créditée à un utilisateur.

9. Procédé selon l'une des revendications précédentes, des coûts de réutilisation dudit produit (11-15) étant facturés à un utilisateur ou à un fabricant (5) dudit produit (11-15).

10. Procédé selon l'une des revendications précédentes, ledit code nouvellement disponible comprenant un ensemble de données d'identification d'un fabricant (5) dudit produit (11-15).

11. Procédé selon la revendication précédente, ledit code nouvellement disponible étant d'abord proposé audit fabricant (5).

12. Procédé selon la revendication précédente, ledit code nouvellement disponible étant proposé par ledit fabricant (5) à un autre acquéreur (6).

13. Procédé selon l'une des revendications précédentes, ledit code nouvellement disponible étant vendu.

14. Procédé selon l'une des revendications précédentes, ledit code nouvellement disponible étant vendu lors d'une vente aux enchères.

15. Procédé selon l'une des revendications précédentes, ledit code nouvellement disponible étant vendu électroniquement.

16. Procédé selon l'une des revendications précédentes, ledit code nouvellement disponible étant vendu via Internet (3).

17. Procédé selon l'une des revendications précédentes, ledit code nouvellement disponible étant proposé avec d'autres codes ayant un ensemble de données commun avec ledit code nouvellement disponible.

18. Procédé selon l'une des revendications précédentes comprenant l'étape supplémentaire suivante :
- archiver des données concernant ledit produit (11-15) dans un système de suivi.

19. Procédé selon la revendication précédente, comprenant l'étape supplémentaire suivante :
- enregistrer la réutilisation dudit code dans lesdites données.

20. Procédé selon l'une des revendications précédentes, ledit code nouvellement disponible étant un code EPC.

21. Procédé selon la revendication précédente, comprenant l'étape supplémentaire suivante :
- modifier dans un serveur ONS (42) l'association d'au moins une page PML associée audit code nouvellement disponible.

22. Procédé selon l'une des revendications 20 et 21, comprenant l'étape supplémentaire suivante :
- modifier une page PML contenant des données sur ledit produit (11-15) qui n'est plus disponible.

23. Procédé selon l'une des revendications 20 à 22, comprenant l'étape supplémentaire suivante :
- associer dans un serveur ONS (42) une nouvelle page PML audit code nouvellement disponible.
